# EUROPÄISCHE PATENTSCHRIFT

(11) **EP 4 327 006 B1**
(45) Veröffentlichungstag und Bekanntmachung des Hinweises auf die Patenterteilung: **25.11.2026**
(21) Anmeldenummer: 22768624.3
(22) Anmeldetag: 01.09.2022
(51) Int. Cl.: F16K 31/385, F16K 1/52, F16K 31/08, F16K 31/56, F16K 31/60, F16K 31/524

(54) **SERVOVENTIL**
SERVO VALVE
SERVOVANNE

(30) Priorität: 02.09.2021 DE 102021122776
(43) Veröffentlichungstag der Anmeldung: 28.02.2024
(73) Patentinhaber: A. u. K. Müller GmbH & Co. KG, 40595 Düsseldorf (DE)
(72) Erfinder: ARNDT, Wolfgang, 40595 Düsseldorf (DE); BERGER, Gerd, 40595 Düsseldorf (DE); MÜNSTERMANN, Markus, 40595 Düsseldorf (DE); RECHENBACH, Dennis, 40595 Düsseldorf (DE)
(74) Vertreter: Feder Walter Ebert
(86) Internationale Anmeldenummer: PCT/DE2022/100648
(87) Internationale Veröffentlichungsnummer: WO 2023/030580

(56) Entgegenhaltungen:
- EP-A1- 3 276 233
- EP-A1- 3 587 880
- EP-A1- 3 593 022
- DE-A1- 102017 115 191
- GB-A- 2 103 391
- JP-A- 2008 256 141

## Beschreibung

Die vorliegende Erfindung betrifft ein Ventil, insbesondere Servoventil, mit einem Ventilgehäuse, einem Hauptventil und einem über eine Push-Push-Mechanik betätigbaren Vorsteuerventil zur Verstellung des Hauptventils zwischen einer Offen- und einer Schließstellung.

Ventile dieser Art werden in verschiedenen Bereichen der Technik zum Steuern insbesondere von Fluidströmen eingesetzt, beispielsweise in Sanitärarmaturen oder anderen Anwendungen.

Innerhalb des Ventilgehäuses des Ventils ist ein Hauptventil angeordnet, welches zur Steuerung des Fluidstroms zwischen einer Offen- und einer Schließstellung verstellt werden kann. Im Unterschied zu direktschaltenden Ventilen, bei denen zur Betätigung des Hauptventils eine oftmals vergleichsweise große Energie benötigt wird, wird zur Verstellung des Hauptventils ein kleineres Vorsteuerventil genutzt, welches unterstützt durch den Betriebsdruck des zu schaltenden Fluidstroms ein Schalten des Hauptventils mit geringerem Energiebedarf erlaubt.

Bei einigen Ventilen dieser Bauart ist es so, dass die Betätigung des Vorsteuerventils durch manuelle Betätigung einer Push-Push-Mechanik erfolgt, über welche sich das Vorsteuerventil zwischen zwei Schaltpositionen verstellen lässt, wodurch sich entsprechend auch das Hauptventil zwischen dessen Schließ- und einer Offenstellung verstellen lässt.

Es gibt jedoch auch Anwendungen, bei denen eine Durchflussmengenregulierung gewünscht ist, der Fluidstrom also nicht nur zwischen der geschlossenen und der voll geöffneten Stellung geschaltet werden soll, etwa im Falle einer Sanitärarmatur oder ähnlichen Anwendungen.

Vorsteuerventile mit Durchflussmengenregulierung sind beispielsweise aus der JP 2008 256141 A und der GB 2 103 391 A bekannt. Ferner beschreibt auch das Dokument EP 3 587 880 A1 ein Vorsteuerventil, bei dem eine Durchflussmengenregulierung vorgesehen ist.

Aus der EP 3 593 022 A1 ist es in diesem Zusammenhang bekannt, zur Betätigung eines Vorsteuerventils eine Push-Push-Mechanik mit drei Schaltstufen vorzusehen, bei welcher eine erste Schaltstufe der voll geschlossenen, eine zweite Schaltstufe der voll geöffneten und eine dritte Schaltstufe einer Zwischenstellung entspricht. Durch mehrfaches Betätigen der Push-Push-Mechanik lassen sich die drei Schaltstufen nacheinander durchschalten und auf diese Weise auch eine Zwischenstellung des Fluidstroms einstellen. Diese Art von Ventilen erlaubt zwar eine gestufte Mengenregulierung, jedoch hat sich die Handhabung aufgrund der erforderlichen Mehrfachbetätigung der Push-Push-Mechanik als nachteilig erwiesen und wird von den Nutzern etwa herkömmlicher Badarmaturen häufig als umständlich empfunden.

Ein weiteres Ventil mit einer Durchflussmengenregulierung ist aus der EP 3 740 708 A1 bekannt, bei welcher ein das Handbedienelement der Push-Push-Mechanik umgebendes, hülsenförmiges Stellteil vorgesehen ist, über welches sich ein Druckstück der Push-Push-Mechanik über eine gerastete Anschlaglinie verstellen lässt. Bei diesem Ventil lässt sich über die Push-Push-Mechanik zwischen der geschlossenen Stellung und der Offenstellung hin und her schalten. Durch Verdrehung der die Push-Push-Mechanik umgebenden Hülse lässt sich die Durchflussmenge in der Offenstellung entsprechend der Rastung der Anschlaglinie in mehrere Stufen einstellen. Auch diese Art der Ventilbetätigung hat sich in der Praxis als umständlich erwiesen, da ein erstes Handbedienelement zum Betätigen der Push-Push-Mechanik erforderlich ist und ein zweites, hülsenförmiges Handbedienelement zum Einstellen der Durchflussmenge.

Ein weiterer Nachteil beider zuvor beschriebener Ventile liegt zudem darin, dass eine Mengenregulierung zwar mehr oder weniger genau möglich ist, eine Nachrüstung von Ventilen mit den entsprechenden Mengenregulierungen jedoch nicht oder zumindest nicht ohne Weiteres möglich ist.

Die Erfindung stellt sich daher die **Aufgabe**, ein Ventil anzugeben, bei welchem eine auch als Nachrüstlösung geeignete Mengenregulierung auf einfache und bedienerfreundliche Art und Weise möglich ist.

Diese Aufgabe wird bei einem Ventil der eingangs genannten Art durch die Merkmale des Patentanspruchs 1 **gelöst**.

Über den Stellaufsatz lässt sich die Durchflussmenge des Ventils auf einfache und bedienerfreundliche Art und Weise einstellen. Durch die lösbare Anordnung an dem Ventilgehäuse und der Push-Push-Mechanik lässt sich der Stellaufsatz ohne Weiteres auch als Nachrüstlösung einsetzen. Dabei ist es insbesondere nicht erforderlich, ein vorhandenes Ventil zu zerlegen, um dieses nachträglich mit einer Durchflussmengenregelung auszustatten. Der Stellaufsatz kann mit wenigen Handgriffen an einem vorhandenen Ventil nachgerüstet werden.

Eine vorteilhafte Ausgestaltung sieht vor, dass über den Stellaufsatz die Push-Push-Mechanik bedienbar ist. Auf diese Weise kommt dem Stellaufsatz eine Doppelfunktion zu. Über den Stellaufsatz lässt sich einerseits die Offenstellung des Hauptventils zur Durchflussmengenregulierung einstellen. Überdies lässt sich über den Stellaufsatz auch das Vorsteuerventil und über dieses das Hauptventil zwischen dessen Offen- und Schließstellung schalten. In diesem Zusammenhang ist es vorteilhaft, wenn der Stellaufsatz derart ausgebildet ist, dass sich eine Einhandbedienung ergibt, sowohl zur Betätigung der Push-Push-Mechanik als auch zur Mengenregulierung.

Erfindungsgemäß ist dabei vorgesehen, dass durch Druckbetätigung des Handbedienelements aus Anspruch 1 die Push-Push-Mechanik bedienbar und durch Drehbetätigung des Handbedienelements die Offenstellung einstellbar ist. Bei dem Handbedienelement kann es sich um ein von der Hand des Bedieners direkt zu berührendes Element handeln. Alternativ kann es sich auch um ein solches Element handeln, auf welches beispielsweise ein verchromter Betätigungsknopf einer Sanitärarmatur aufgesteckt wird. Die Druckbetätigung des Handbedienelements kann in Vorsteuerrichtung des Vorsteuerventils und/oder entlang der Hauptventilachse des Ventils erfolgen. Über eine Rückstellfeder kann eine Rückstellung erfolgen. Die Offenstellung des Hauptventils kann durch eine Drehbetätigung des Handbedienelements einstellbar sein. Die Drehbetätigung kann derart ausgestaltet sein, dass durch Drehung in die eine Richtung die Durchflussmenge reduziert und durch Drehung in die entgegengesetzte Richtung die Durchflussmenge erhöht wird. Insbesondere kann vorgesehen sein, dass die Durchflussmenge durch eine Linksdrehung erhöht und durch eine Rechtsdrehung reduziert wird, was dem Bediener von anderen Anwendungen her bekannt ist und insoweit eine intuitive Mengenregulierung erlaubt.

Eine besonders vorteilhafte Ausgestaltung sieht vor, dass der Stellaufsatz zwei zur Einstellung der Offenstellung gegeneinander verdrehbare, mit der Push-Push-Mechanik wirkverbundene Stellelemente aufweist. Durch gegenseitiges Verdrehen kann auf diese Art und Weise die Push-Push-Mechanik verstellt werden. Hierdurch lässt sich die Offenstellung des Hauptventils verstellen. Insbesondere kann die Verstellung durch stufenloses Verdrehen stufenlos erfolgen.

Eine konstruktiv vorteilhafte Ausgestaltung sieht vor, dass die Stellelemente als Stellscheiben ausgebildet sind. Die Stellscheiben können in axialer Richtung der Push-Push-Mechanik und/oder des Pilotventils flächig aneinander anliegen. Es ergeben sich geringe, über eine große Fläche verteilte Kräfte und damit ein geringer Verschleiß der Stellelemente. Die Stellscheiben können als separate Bauteile ausgeführt werden. Alternativ können eine oder beide Stellscheiben auch einstückig mit anderen Bauteilen des Stellaufsatzes ausgebildet sein. Hierdurch kann die Teilezahl reduziert und der Montageaufwand bei der Anordnung des Stellaufsatzes an dem Ventilgehäuse und/oder der Push-Push-Mechanik gering gehalten werden.

Von besonderem Vorteil ist ferner eine Ausgestaltung, nach welcher die Stellelemente als ein Hubscheibenpaar ausgebildet sind. Der Vorteil eines Hubscheibenpaares liegt darin, dass durch gegenseitiges Verdrehen der Stellscheiben die entsprechende Drehbewegung auf einfache Weise in eine zur Betätigung der Push-Push-Mechanik nutzbare Axialbewegung überführbar ist.

In diesem Zusammenhang wird ferner vorgeschlagen, dass die Stellelemente schräg verlaufende Stellflächen aufweisen. Über die schräg verlaufenden Stellflächen kann eine Drehbewegung in eine Axialbewegung überführt werden. Über den Winkel der schräg verlaufenden Stellflächen lässt sich das Übersetzungsverhältnis zwischen der Dreh- und Axialbewegung einstellen. Ferner kann über den Winkel eine Selbsthemmung erreicht werden, so dass die Stellelemente deren Drehstellung stets beibehalten und ein ungewolltes Rückdrehen verhindert wird.

Eine konstruktive vorteilhafte Ausgestaltung sieht vor, dass die Stellelemente jeweils zwei Stellflächen aufweisen. Hierdurch kann eine gleichmäßige Übertragung der Stellkräfte erfolgen. Die erforderlichen Stellkräfte werden zudem auf zwei Stellflächen verteilt. Es ergibt sich ein geringer Verschleiß.

Vorteilhafterweise sind zwischen den jeweils zwei Stellflächen Anschläge zur Begrenzung der Drehbewegung angeordnet. Über die Anschläge wird ein Überdrehen verhindert. Der Drehwinkel wird auf einen Winkel kleiner 180° begrenzt. Vorteilhafterweise definieren die Anschläge die maximale Durchflussmenge sowie die minimale Durchflussmenge in der Offenstellung des Hauptventils.

Eine konstruktiv vorteilhafte Weiterbildung sieht ferner vor, dass ein Stellelement als eine mit der Push-Push-Mechanik verbundene Stellscheibe ausgebildet ist. Die Stellscheibe kann mit der Push-Push-Mechanik lösbar verbunden werden. Beispielsweise kann die Stellscheibe aus axialer Richtung her kommend auf ein Druckstück der Push-Push-Mechanik gesteckt werden. Die Verbindung zwischen der Stellscheibe und der Push-Push-Mechanik kann durch Klemmen, Rasten und/oder Formschluss erfolgen. Beispielsweise kann die Stellscheibe eine mit der Außenkontur des Druckstücks der Push-Push-Mechanik korrespondierende Ausnehmung aufweisen. Wichtig ist, dass die Stellscheibe mit der Push-Push-Mechanik verdrehgesichert verbunden ist.

Eine montagetechnisch vorteilhafte Ausgestaltung sieht vor, dass ein Stellelement an dem Handbedienelement angeordnet ist. Denn auf diese Art und Weise lässt sich das Stellelement gemeinsam mit dem Handbedienelement in einem Montageschritt an dem Ventil anordnen.

Eine fertigungstechnisch vorteilhafte Ausgestaltung sieht vor, dass das Stellelement einstückig mit dem Handbedienelement verbunden ist. Das Stellelement kann beispielsweise in einem Spritzgussverfahren einstückig an das Handbedienelement angespritzt werden. Hierdurch werden die Teilezahl und auch der Montageaufwand reduziert.

Erfindungsgemäß ist vorgesehen, dass das Handbedienelement mit dem Ventilgehäuse rastverbunden ist. Über die Verbindung mit dem Ventilgehäuse stützt sich das Handbedienelement gegenüber dem Ventilgehäuse ab. Durch die Rastverbindung des Handbedienelements mit dem Ventilgehäuse kann das Handbedienelement werkzeuglos mit dem Ventilgehäuse verbunden werden.

Eine weitere vorteilhafte Ausgestaltung sieht vor, dass das Handbedienelement derart mit dem Ventilgehäuse verbunden ist, dass es entgegen der Kraft einer sich spannenden Feder axial in Richtung der Push-Push-Mechanik bewegbar und gegenüber dem Ventilgehäuse drehbeweglich ist. Durch Aufbringen einer Druckkraft auf das Handbedienelement kann dieses entgegen der Kraft der sich spannenden Feder axial bewegt werden. Diese axiale Bewegung kann zur Betätigung der Push-Push-Mechanik genutzt werden. Aufgrund der gegenüber dem Ventilgehäuse drehbeweglichen Anordnung des Handbedienelements kann die Offenstellung des Hauptventils zur Durchflussmengenregulierung durch Drehen des Handbedienelements verstellt werden.

Eine weitere vorteilhafte Ausgestaltung sieht vor, dass das Handbedienelement Rastelemente aufweist, die mit einer an dem Ventilgehäuse angeordneten Raststruktur verrastet werden. Die Rastelemente können einstückig an dem Handbedienelement angeformt sein.

In diesem Zusammenhang hat es sich als vorteilhaft erwiesen, wenn die Rastelemente an federnden Zungen ausgebildet sind. Die mit den Rastelementen ausgestatteten Zungen bilden Rastzungen. Neben den Rastzungen können auch Umfangsbereiche des Handbedienelements nicht zur Verrastung beitragen. Beispielsweise kann vorgesehen sein, dass das zylindrische Handbedienelement in einem Endbereich in gleichmäßigen Abständen in Zungen unterteilt ist, wobei etwa jede zweite, dritte oder vierte Zunge als Rastzunge ausgebildet ist.

Im Hinblick auf die an dem Ventilgehäuse angeordnete Raststruktur hat es sich als vorteilhaft erwiesen, wenn diese als umlaufender Rastkragen ausgebildet ist. Insbesondere kann der Rastkragen über einen Winkelbereich von 360° über den gesamten Umfang des Ventilgehäuses umlaufend angeordnet sein. Bei dem Rastkragen kann es sich um einen ringförmigen Vorsprung handeln. Oberhalb des Rastkragens können sich in Axialrichtung erstreckende Stabilisierungselemente angeordnet sein, welche an der Innenseite des Handbedienelements anliegen und dessen Axial- und Drehbewegungen führen. Über die sich spannende Feder wird zuverlässig eine Rückstellung des Handbedienelements in dessen axiale Ausgangslage erreicht. Für den Bediener befindet sich das Handbedienelement nach erfolgter Bedienung stets in der gleichen axialen Stellung. Auch dies ist dem Bedienkomfort zuträglich.

Schließlich wird ein Stellaufsatz zur lösbaren Anordnung an einem ein Ventilgehäuse, ein Hauptventil und ein über eine Push-Push-Mechanik betätigbares Vorsteuerelement zur Verstellung des Hauptventils zwischen einer Offen- und einer Schließstellung aufweisenden Ventil beschrieben, welcher durch ein Handbedienelement gekennzeichnet ist, welches derart ausgebildet ist, dass durch Druckbetätigung des Handbedienelements die Push-Push-Mechanik bedienbar und durch Drehbetätigung des Handbedienelements die Offenstellung einstellbar ist.

Auch durch den Stellaufsatz ergeben sich die bereits im Zusammenhang mit dem Ventil erläuterten Vorteile. Zudem kann der Stellaufsatz sämtliche der vorstehend genannten Merkmale des im Zusammenhang mit dem Ventil erläuterten Stellaufsatzes aufweisen, auch in Kombination. Insbesondere kann über den Stellaufsatz die Push-Push-Mechanik bedienbar sein. Ferner kann der Stellaufsatz zwei zur Einstellung der Offenstellung gegeneinander verdrehbare, mit der Push-Push-Mechanik wirkverbundene Stellelemente aufweisen. Auch können die Stellelemente als Stellscheiben ausgebildet sein. Die Stellelemente des Stellaufsatzes können ferner ein Hubscheibenpaar bilden. Auch können die Stellelemente schräg zueinander verlaufende Stellflächen aufweisen. Die Stellelemente können zudem jeweils zwei Stellflächen aufweisen. Ferner können zwischen den jeweils zwei Stellflächen Anschläge zur Begrenzung der Drehbewegung angeordnet sein. Ein Stellelement kann als mit der Push-Push-Mechanik verbundene Stellscheibe ausgebildet sein. Das andere Stellelement kann an dem Handbedienelement angeordnet sein. In diesem Zusammenhang kann das Stellelement insbesondere einstückig mit dem Handbedienelement verbunden sein. Ferner kann das Handbedienelement mit dem Ventilgehäuse verbindbar, insbesondere rastverbindbar, sein. Ferner kann das Handbedienelement des Stellaufsatzes derart mit dem Ventilgehäuse verbindbar sein, dass es entgegen der Kraft einer sich spannenden Feder axial in Richtung der Push-Push-Mechanik bewegbar und gegenüber diesem drehbeweglich ist. Das Handbedienelement kann ferner Rastelemente aufweisen, die mit einer an dem Ventilgehäuse angeordneten Raststruktur verrastbar sind. Die Rastelemente können als federnde Rastzungen ausgebildet sein.

Weitere Einzelheiten und Vorteile eines erfindungsgemäßen Ventils sowie eines Stellaufsatzes werden nachfolgend unter Zuhilfenahme der beigefügten Zeichnungen eines Ausführungsbeispiels erläutert. Darin zeigen:
- Fig. 1: in perspektivischer Ansicht ein Ventil,
- Fig. 2: eine teilweise geschnittene Ansicht des Ventils gemäß der Darstellung in Fig. 1,
- Fig. 3a) und 3b): teilweise explodierte Ansichten des Ventils gemäß Fig. 1,
- Fig. 4: eine weitere Explosionsansicht von Teilen des Ventils gemäß Fig. 1,
- Fig. 5a) und 5b): zwei Einzelteilansichten eines Handbedienelements,
- Fig. 6: drei Einzelteilansichten eines Stellelements,
- Fig. 7a) bis 7c): das Ventil gemäß der Darstellung in Fig. 1 in teilweise geschnittener Ansicht in dessen Offenstellung, wobei mit Fig. 7a) die maximal geöffnete Stellung, mit Fig. 7b) eine Zwischenstellung und mit Fig. 7c) die minimal geöffnete Stellung gekennzeichnet ist,
- Fig. 8a) bis 8c): das Ventil gemäß der Darstellung in Fig. 1 in geschnittener Ansicht in dessen Offenstellung, wobei mit Fig. 8a) die maximal geöffnete Stellung, mit Fig. 8b) eine Zwischenstellung und mit Fig. 8c) die minimal geöffnete Stellung gekennzeichnet ist und
- Fig. 9a) bis 9c): das Ventil gemäß der Darstellung in Fig. 1 in teilweise geschnittener Ansicht in dessen Offenstellung, wobei mit Fig. 9a) die maximal geöffnete Stellung, mit Fig. 9b) eine Zwischenstellung und mit Fig. 9c) die minimal geöffnete Stellung gekennzeichnet ist.

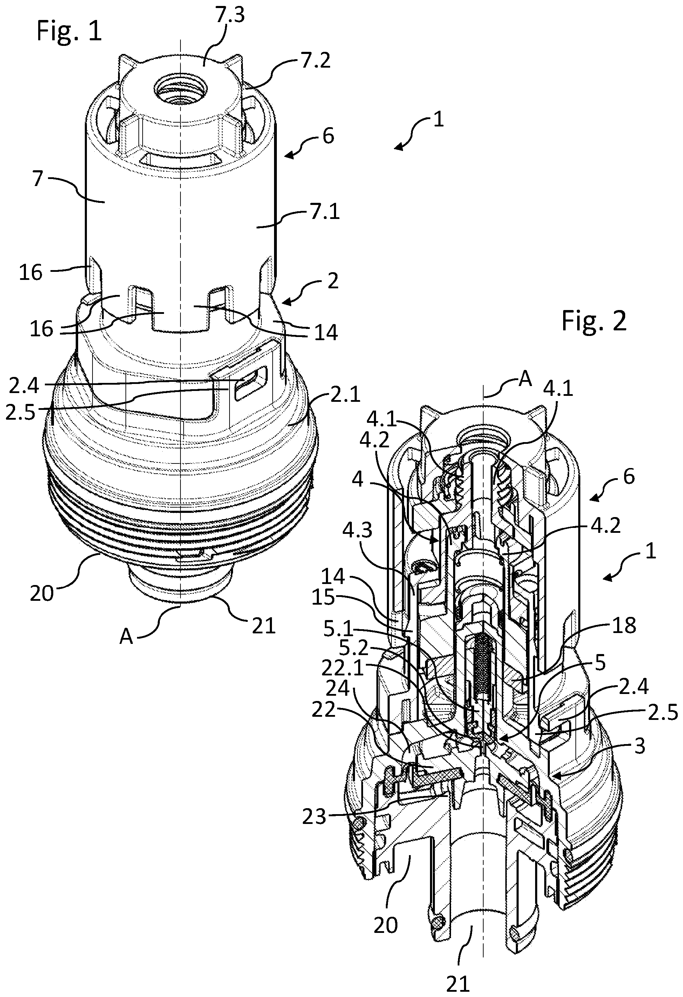

Die Darstellungen in den Fig. 1 und 2 zeigen in perspektivischer sowie teilweise geschnittener Ansicht ein als Kartuschenventil ausgebildetes Ventil 1. Es handelt sich um ein Servoventil, wie dieses im Sanitärbereich, beispielsweise in Duscharmaturen, eingesetzt wird.

Das Ventil 1 weist einen Ventileinlauf 20 sowie einen koaxial zu diesem angeordneten Ventilauslauf 21 auf. Insoweit handelt es sich um ein Koaxialventil. Im Fließweg zwischen dem Ventileinlauf 20 und dem Ventilauslauf 21 ist ein Hauptventil 3 angeordnet, welches in den Fig. 1 und 2 in dessen geöffneter Stellung abgebildet ist. In dieser Stellung gibt ein zwischen dem Schließelement 22 des Hauptventils 3 und dem Ventilsitz 23 des Hauptventils 3 angeordneter, ringförmiger Spalt den Fließweg zwischen dem Ventileinlauf 20 und dem Ventilauslauf 21 frei. Bei dem Schließelement 22 handelt es sich um eine Schließmembrane, deren Position über ein Vorsteuerventil 5 kleineren Durchmessers ansteuerbar ist.

Das Vorsteuerventil 5 weist ein bewegbar angeordnetes Vorsteuerelement 5.1 auf, welches mit einer Steueröffnung 22.1 des Schließelements 22 zusammenwirkt. Das Vorsteuerelement 5.1 ist nach Art eines magnetischen Plungers ausgebildet und wirkt mit einem als Permanentmagnet ausgebildeten Magneten 18 zusammen. Das Vorsteuerelement 5.1 ist mit dem Magneten 18 magnetisch gekoppelt. Der Magnet 18 ist mit der Push-Push-Mechanik 4 wirkverbunden. Durch Betätigung der Push-Push-Mechanik 4 wird der Magnet 18 entlang der Ventilachse A des Ventils 1 bewegt. Aufgrund der magnetischen Kopplung folgt das Vorsteuerelement 5.1 dieser Bewegung und lässt sich auf diese Weise durch Betätigung der Push-Push-Mechanik 4 bistabil zwischen zwei Endlagen hin und her schalten.

In der geschlossenen Stellung des Hauptventils 5 verschließt das Vorsteuerelement 5.1 mit einer Dichtfläche 5.2 die Steuerbohrung 22.1 des Schließelements 22. In dieser Stellung wird das Schließelement 22 über den Druck des anliegenden Fluids auf den Ventilsitz 23 gedrückt und dichtet diesen fluiddicht ab. Durch Betätigung der Push-Push-Mechanik 4 wird der Magnet 18 in seine andere stabile Endlage überführt. Dabei wird das mit diesem magnetisch gekoppelte Vorsteuerelement 5.1 mitgenommen und gibt die Steueröffnung 22.1 frei. Das Fluid kann nun von einem oberhalb des Schließelements 22 angeordneten Druckraum 24 über die Steueröffnung 22.1 in den Ventilauslauf 21 fließen, wodurch sich die Druckverhältnisse im Inneren des Ventils 1 so ändern, dass das Schließelement 22 über den Druck des anliegenden Fluids angehoben wird.

Beim Anheben des Schließelements 22 bildet das Vorsteuerelement 5.1 einen dessen Hub begrenzenden hydraulischen Anschlag. Das Schließelement 22 wird über den Druck des am Ventileingang 20 anliegenden Fluids zunächst solange angehoben, bis es in Kontakt mit der Dichtfläche 5.2 des darüber positionierten Vorsteuerelements 5.1 gelangt. Die Steuerbohrung 22.1 wird hierdurch kurzzeitig geschlossen und das Schließelement 22 über den sich oberhalb des Schließelements 22 aufbauenden Druck in entgegengesetzter Richtung bewegt bis die Steuerbohrung 22 wieder geöffnet ist. Es ergibt sich eine Art schwingende Bewegung des Schließelements 22, wobei sich nach einigen Schwingungen im Ergebnis ein Schwebezustand des Schließelements 22 knapp unterhalb des Vorsteuerelements 5.1 einstellt. Die sich dabei einstellende Position des Schließelements 22 ist von der axialen Stellung des Vorsteuerelements 5.1 abhängig und hat direkten Einfluss auf die Durchflussmenge des Ventils 1. Über die axiale Stellung des als hydraulischer Anschlag wirkenden Vorsteuerelements 5.1 des Pilotventils 5 lässt sich daher die durch das Ventil 1 strömende Durchflussmenge regulieren.

Das Ventil 1 weist ein Ventilgehäuse 2 auf, in welchem die einzelnen Komponenten des Ventils 1 aufgenommen sind. Das Ventilgehäuse 2 weist zwei Gehäuseteile 2.1, 2.2 auf. Die beiden Gehäuseteile 2.1, 2.2 sind über eine Verbindungsstelle 2.3 miteinander verbunden. Beim Ausführungsbeispiel ist die Verbindungsstelle 2.3 als eine Rastverbindung mit auf gegenüberliegenden Seiten des Ventilgehäuses 2 angeordneten, jeweils eine Rastverbindung bildenden Rastelementen 2.4, 2.5 ausgebildet. In dem Gehäuseteil 2.1 sind hydraulische Komponenten des Ventils 1 aufgenommen, wie etwa das Hauptventil 3, das Vorsteuerventil 5 sowie der Ventileinlauf 20 und der Ventilauslauf 21. Insoweit handelt es sich bei dem Gehäuseteil 2.1 um ein Hydraulikgehäuse. In dem anderen Gehäuseteil 2.2 sind die Komponenten zum Schalten des Hauptventils 2 aufgenommen, wie etwa die Push-Push-Mechanik 4 und der Magnet 18. Insoweit handelt es sich bei dem Gehäuseteil 2.2 um ein Schaltgehäuse.

Wie nachfolgend noch näher zu erläutern sein wird, ist das Ventil 1 nicht nur zwischen dessen geschlossener und der in Fig. 2 dargestellten, voll geöffneten Stellung umschaltbar, sondern lässt sich zum Zwecke der Durchflussmengenregulierung auch stufenlos einstellen.

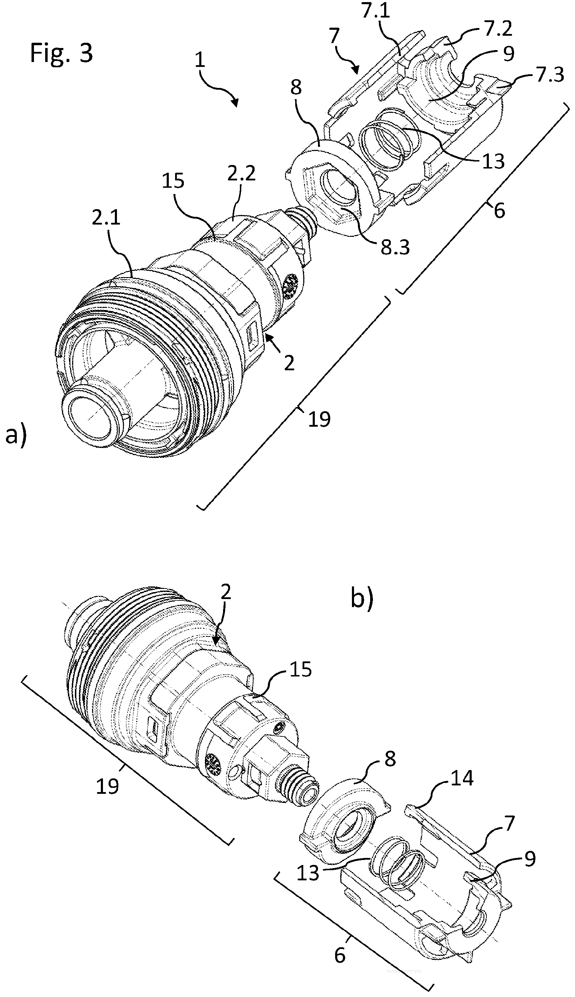

Zur Durchflussmengenregulierung weist das Ventil 1 einen in axialer Richtung auf eine Basisventileinheit 19 des Ventils 1 aufsetzbaren Stellaufsatz 6 auf, vgl. Fig 3a) und 3b). Auch ohne den Stellaufsatz 6 bildet die Basisventileinheit 19 ein funktionsfähiges Servoventil, d.h. es könnte über die Push-Push-Mechanik 4 ein Fluidstrom zwischen der geschlossenen und einer voll geöffneten Stellung des Hauptventils 3 geschaltet werden. Über den Stellaufsatz 6 wird die Funktion der Basisventileinheit 19 auf einfache Art und Weise um eine Durchflussmengenregulierung ergänzt. Hierzu kann der Stellaufsatz 6 auch als Nachrüstlösung mit wenigen Handgriffen lösbar mit dem Ventilgehäuse 2 und der Push-Push-Mechanik 4, die Teile der Basisventileinheit 19 sind, verbunden werden.

Der Stellaufsatz 6 weist als wesentliche Elemente ein Handbedienelement 7, zwei miteinander zusammenwirkende Stellelemente 8, 9 und eine als Rückstellelement dienende Feder 13 auf.

Wie die Darstellung in Fig. 1 dies bereits erkennen lässt, ist das Handbedienelement 7 von insgesamt topfförmiger Geometrie. Das Handbedienelement 7 weist einen im Wesentlichen zylindrischen Mantel 7.1 sowie einen Boden 7.2 auf. An dem Boden 7.2 ist ein Verbindungsmittel 7.3 vorgesehen, an welchem das Handbedienelement 7 mit einer Kappe verbunden werden kann. An dem Verbindungsmittel 7.3 kann beispielsweise eine verchromte Blendkappe einer Sanitärarmatur angeordnet werden, welche an das Design der jeweiligen Armatur angepasst ist und eine Beschriftung zur Bedienung der Armatur aufweist.

Das Handbedienelement 7 erstreckt sich axial entlang der Ventilachse A und ist mit dem seiner Bedienseite gegenüberliegenden Ende mit dem Gehäuseteil 2.2 des Ventilgehäuses 2 verbunden. Zur Verbindung mit dem Ventilgehäuse 2 weist das Handbedienelement 7 an dessen offenem Ende mehrere über den Umfang des Handbedienelements 7 verteilt angeordnete, sich koaxial zur Achse des Ventils A erstreckende Zungen 16 auf. Ein Teil der Zungen 16 ist mit Rastelementen 14 versehen. Beim Ausführungsbeispiel ist jede zweite Zunge 16 mit einem Rastelement 14 versehen. Die übrigen Zungen 16 dienen zur Führung der Bewegungen des Handbedienelements 7. Es können jedoch auch weniger oder mehr Zungen 16 mit Rastelementen 14 versehen sein.

Die Rastelemente 14 wirken mit einer an dem Ventilgehäuse 2 vorgesehenen Raststruktur 15 zusammen. Die Raststruktur 15 ist nach Art eines das Ventilgehäuse 2 ringförmig umgebenden, radialen Vorsprungs ausgebildet, vgl. Fig. 3a) und 3b). Die Raststruktur 15 ist an dem Gehäuseteil 2.2 angeordnet und einstückig mit diesem verbunden. Das Handbedienelement 7 kann aus axialer Richtung her kommend entlang der Ventilachse A über die Rastelemente 14 mit der Raststruktur 15 des Ventilgehäuses 2 verrastet werden, vgl. auch Fig. 2. Das kappenförmige Bedienelement 7 ist mit dem Gehäuse 2 derart verrastet, dass das Handbedienelement 7 in axialer Richtung entgegen der Kraft der sich spannenden Feder 13 in Richtung der Basisventileinheit 19 bewegt werden kann. Über die Feder 13 erfolgt eine Rückstellung des Handbedienelements 7, so dass die Rastelemente 14 stets bestrebt sind, in Anlage hinter der Raststruktur 15 zu gelangen. Die Rastverbindung des Handbedienelements 7 mit dem Ventilgehäuse 2 ist ferner dergestalt, dass das Handbedienelement 7 gegenüber dem Gehäuse 2 frei drehbar ausgebildet ist.

Durch eine Druckbetätigung kann das Handbedienelement 7 axial entgegen der Kraft der sich spannenden Feder 13 bewegt werden. Diese Axialbewegung wird zur Betätigung der Push-Push-Mechanik 4 genutzt. Durch die Drehbewegung des Handbedienelements 7 kann die Durchflussmenge des Ventils 1 in dessen offener Stellung reguliert werden.

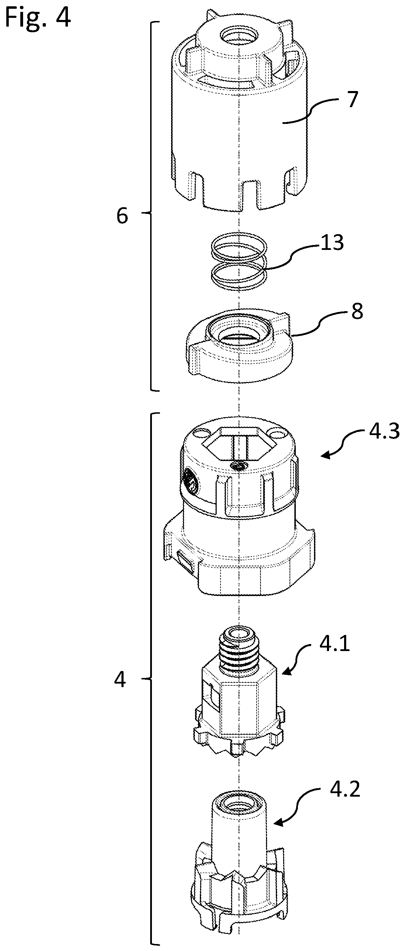

In Fig. 4 dargestellt ist der Stellaufsatz 6 sowie Teile der Push-Push-Mechanik 4 der Basisventileinheit 19. Wie zu erkennen ist, handelt es sich bei der Push-Push-Mechanik 4 um eine nach Art einer herkömmlichen Kugelschreiber-Mechanik ausgebildete Push-Push-Mechanik 4. Durch Aufbringen eines Drucks auf das Druckstück 4.1 erfolgt innerhalb einer Hülse 4.3 des Gehäuseteils 2.2 eine Axial- und Drehverstellung eines Vorschubelements 4.2, wie dies von Kugelschreibern bekannt ist. Durch Betätigung des Druckstücks 4.1 der Push-Push-Mechanik 4, welche mit dem Vorsteuerelement 5.1 des Vorsteuerventils 5 gekoppelt ist, lässt sich das Vorsteuerelement 5.1 zwischen zwei Endlagen bistabil hin und her schalten.

Wie wiederum die Darstellungen in den Fig. 3a) und 3b) erkennen lassen, weist der Stellaufsatz 6 zwei zueinander korrespondierend gestaltete Stellelemente 8, 9 auf.

Das eine Stellelement 8 wird von einer separaten Stellscheibe gebildet. Die Stellscheibe 8 ist mit einem Druckstück 4.1 der Push-Push-Mechanik 4 drehfest verbunden, beim Ausführungsbeispiel über eine Steckverbindung. Das andere Stellelement 9 ist ebenfalls von scheibenförmiger Geometrie und an der Innenseite des Handbedienelements 7 angeordnet. Beim Ausführungsbeispiel ist das Stellelement 9 mit dem Handbedienelement einstückig verbunden. Das Stellelement 9 ist an dem Boden 7.2 des Handbedienelements 7 angeordnet. Das Stellelement 9 ist an der den Verbindungsmitteln 7.3 gegenüberliegenden Seite angeordnet.

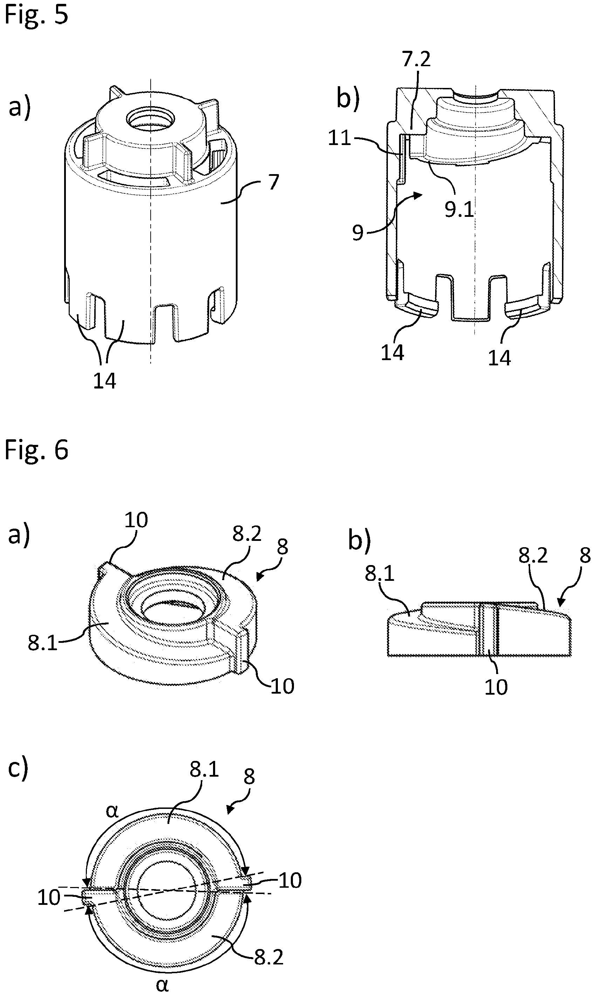

Sowohl das Stellelement 8 als auch das Stellelement 9 weisen jeweils schräg verlaufende Stellflächen 8.1, 8.2, 9.1, 9.2 auf, was auch anhand der Darstellungen in den Fig. 5 und 6 deutlich wird. Die Stellflächen 8.1, 8.2, 9.1, 9.2 verlaufen schräg gegenüber der Drehebene des Handbedienelements 7, so dass die die Drehbewegung des Handbedienelements 7 über die schrägen Stellflächen 8.1, 8.2, 9.1, 9.2 in eine Axialbewegung überführen lässt.

Die Stellflächen 9.1, 9.2 des Stellelements 9, wie auch die Stellflächen 8.1, 8.2 des Stellelements 8, erstrecken sich jeweils über einen Umfangswinkel α von etwas weniger als 180° symmetrisch um die Ventilachse A des Ventils 1. Beim Ausführungsbeispiel beträgt der Umfangswinkel α 160°, vgl. auch Fig. 6 a) bis c). Es ergibt sich eine gleichmäßige, wenig verschleißanfällige Übertragung der zur Betätigung der Push-Push-Mechanik 4 erforderlichen Stellkräfte. Im Bereich zwischen den Stellflächen 8.1, 8.2, 9.1, 9.2 sind Anschläge 10, 11 vorgesehen, die dafür sorgen, dass das Handbedienelement 7 nur zwischen den Anschlägen 10, 11 maximal über den Winkel α hin- und hergedreht werden kann. Ein Überdrehen wird durch die Anschläge 10, 11 verhindert.

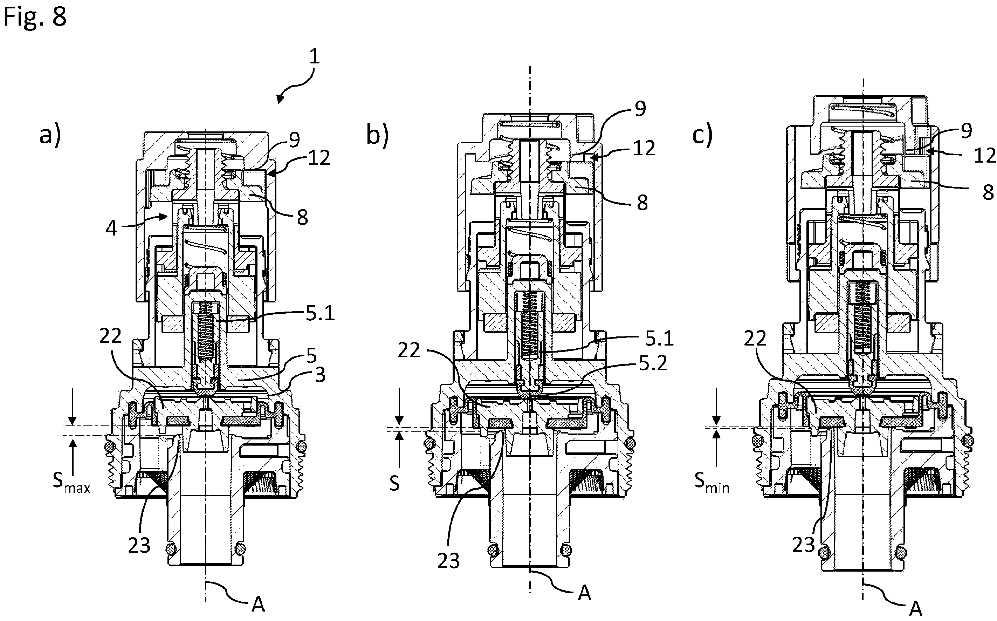

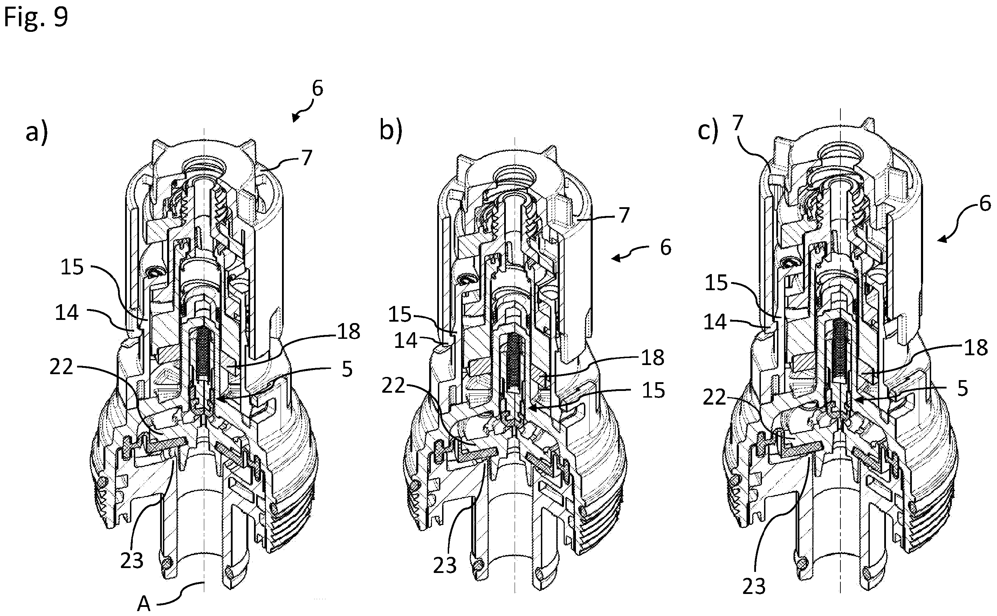

Die Stellflächen 8.1, 8.2 des Stellelements 8 sind korrespondierend zu den Stellflächen 9.1, 9.2 des Stellelements 9 ausgebildet, so dass diese flächig aneinander anliegen und gemeinsam ein Stell- bzw. Hubscheibenpaar 12 bilden, auf dessen Funktion nachfolgend anhand der Darstellungen in den Fig. 8 bis 9 noch näher eingegangen werden wird.

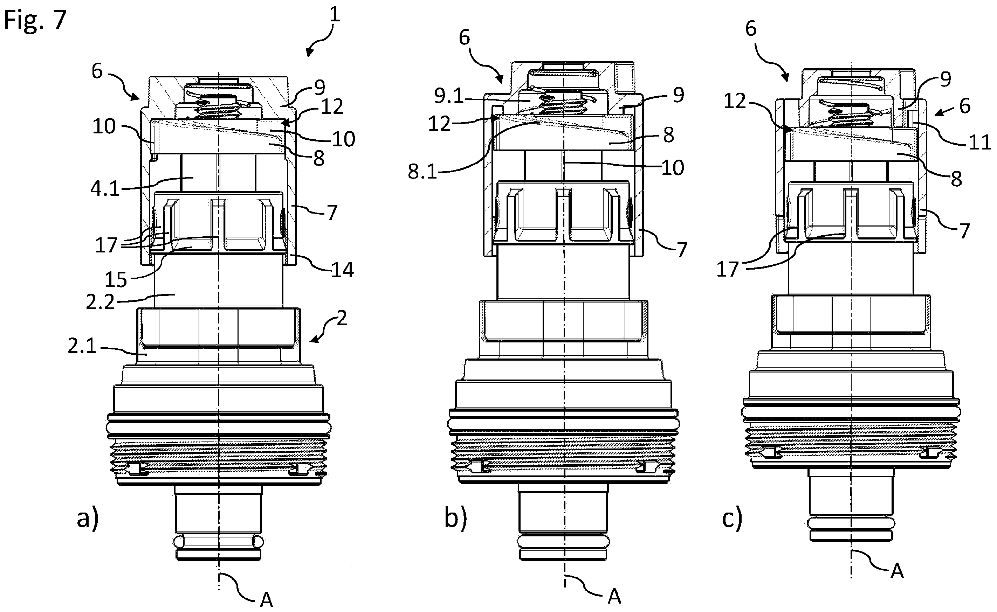

In den Fig. 7 bis 9 sind jeweils geöffnete Stellungen des Ventils 1 dargestellt. Die in den Fig. 7 bis 9 mit einem a) bezeichnete Stellung entspricht der maximal geöffneten Stellung des Ventils 1, die mit einem b) bezeichnete Stellung entspricht einer mittleren Öffnungsstellung und die mit einem c) bezeichnete Stellung entspricht der minimal geöffneten Stellung.

Durch manuelles Aufbringen eines Betätigungsdrucks in Richtung der Ventilachse A des Ventils 1 kann das Handbedienelement 7 axial gegenüber dem Ventilgehäuse 2 des Ventils 1 bewegt werden. Diese Bewegung wird auf ein Druckstück 4.1 der Push-Push-Mechanik 4 übertragen und zum Umschalten des Ventils 1 zwischen der Offenstellung und der Schließstellung des Hauptventils 3 genutzt. Während dieser Bewegung heben die Rastelemente 14 von der Raststruktur 15 in Richtung der Push-Push-Mechanik 4 ab. Nachdem die Push-Push-Mechanik 4 bedient wurde, entfernt der Bediener seine Hand von dem Handbedienelement 7. Es erfolgt eine Rückstellung des Handbedienelements 7 in dessen Ausgangsstellung.

Nach Art einer Ein-Knopf-Bedienung kann über das Handbedienelement 7 auch eine Durchflussmengenregulierung erfolgen. Hierzu kann das Handbedienelement 7 des Stellaufsatzes 6 um die Ventilachse A verdreht werden. Beim Drehen des Handbedienelements 7 dreht das gemeinsam mit dem Handbedienelement 7 drehende Stellelement 9 gegenüber dem unverdrehbar an der Push-Push-Mechanik 4 angeordneten Stellelement 8. Die Kappe 7 liegt während der Drehbewegung axial gesichert über die Rastelemente 14 an der Raststruktur 15 an und drückt das Druckstück 4.1 der Push-Push-Mechanik 4 nach unten, so wie dies beispielsweise der Vergleich der Darstellungen in den Fig. 7a) und 7b) verdeutlicht.

In der maximal geöffneten Stellung gemäß den mit a) bezeichneten Ansichten liegen die Stellflächen 8.1, 8.2 des Stellelements 8 flächig an den Stellflächen 9.1, 9.2 des handbedienelementseitigen Stellelements 9 an. Auch die Anschläge 10, 11 liegen aneinander an, so dass aus der vollgeöffneten Stellung eine Drehbewegung des Handbedienelements 7 nur in eine Richtung möglich ist, so wie dies durch den Richtungspfeil in Fig. 7a) angedeutet ist.

Um den Durchfluss zu reduzieren, kann das Handbedienelement 7 aus der in Fig. 7a) dargestellten, maximal geöffneten Stellung durch eine Rechtsdrehung des Handbedienelements 7 um die Ventilachse A in die in Fig. 7b) dargestellte Zwischenstellung überführt werden. Der Drehwinkel zur Überführung des Ventils 1 aus der Stellung gemäß Fig. 7a) in die Zwischenstellung gemäß Fig. 7b) beträgt beim Ausführungsbeispiel etwa 80°.

Durch das Verdrehen des Handbedienelements 7 wird das Stellelement 8, welches gemeinsam mit dem Stellelement 9 ein Hubscheibenpaar 12 bildet, in axialer Richtung nach unten bewegt und drückt das Druckstück 4.1 der Push-Push-Mechanik nach unten. Dieser Druckbewegung folgt auch das als hydraulischer Anschlag dienende Steuerelement 5.1 des Vorsteuerventils 5, wodurch sich zwischen dem Schließelement 22 und dem Ventilsitz 23 des Hauptventils 3 ein gegenüber dem maximalen Öffnungsspalt Sₘₐₓ geringerer Öffnungsspalt S einstellt, vgl. die Darstellungen in den Fig. 8a) und 8b).

In dieser Stellung liegen die Stellflächen 8.1, 8.2 nur noch in etwa zur Hälfte an den gegenüberliegenden Stellflächen 9.1, 9.2 an.

Durch weitere Drehung des Handbedienelements, wiederum einen Winkel etwa 80°, wird die in den mit c) bezeichneten Figuren dargestellte minimale Durchflussstellung erreicht. In dieser Stellung liegen die Anschläge 10 des Stellelements 8 an den Anschlägen 11 des Handbedienelements 7 an. Ein weiteres Verdrehen in Schließrichtung ist nicht möglich. In dieser Stellung ist der Spalt zwischen dem Ventilsitz 23 Sₘᵢₙ minimal und das Handbedienelements 7 kann aus dieser Stellung nur linksdrehend in Öffnungsrichtung verdreht werden, so wie dies der in Fig. 7c) eingezeichnete Richtungspfeil veranschaulicht.

Die Regulierung der Durchflussmenge erfolgt durch Einstellung der Offenstellung des Ventils 1. Zur Einstellung der Offenstellung des Ventils 1 können die gegeneinander verdrehbar angeordneten Stellscheiben 8, 9 über das Handbedienelement 7 relativ zueinander verdreht werden. Die Stellscheiben 8, 9 sind außerhalb der Push-Push-Mechanik 4 angeordnet. Die Stellscheiben 8, 9 wirken von außen auf die Push-Push-Mechanik 4 ein. Durch Verdrehung der Stellscheiben 8, 9 wird das Druckstück 4.1 der Push-Push-Mechanik 4 axial verschoben. Hierbei bleiben die vorgegebenen Schaltpositionen der Push-Push-Mechanik 4, welche der Umschaltung zwischen der Offen- und der Schließstellung dienen, unverändert.

Bei der Umschaltung zwischen der Offen- und der Schließstellung durch Aufbringen eines Betätigungsdrucks auf das Handbedienelement 7 in Richtung der Ventilachse A verändern die Stellscheiben 8, 9 ihre relative Verdrehung zueinander nicht. Durch Druck auf das Handbedienelement 7 erfolgt somit eine Umschaltung zwischen der Schließstellung und der zuletzt eingestellten Offenstellung.

Wie die Darstellungen, insbesondere in den Fig. 7a) bis 7c), dies erkennen weiter lassen, sind sowohl die Dreh- als auch die Axialbewegungen des Handbedienelements 7 über Führungselemente 17 geführt. Bei den Führungselementen 17 handelt es sich um sich in axialer Richtung des Ventils 1 erstreckende, an dem Außenumfang des Gehäuseteils 2.2. des Ventilgehäuses 2 angeordnete Stege. Die Führungselemente 17 weisen zum vereinfachten Aufstecken des Handbedienelements 7 Aufsteckschrägen 17.1 auf.

Das vorstehende beschriebene Ventil 1 zeichnet sich durch eine einfache Handhabung aus. Über das Handbedienelement 7 lässt sich sowohl die Push-Push-Mechanik 4 betätigen, d. h. das Hauptventil 3 zwischen dessen Offen- und Schließstellung hin und her schalten, durch Drehbewegung des Handbedienelements 7 lässt sich ferner die Offenstellung des Hauptventils 3 zur Mengenregulierung stufenlos verstellen. Der Stellaufsatz 6 lässt sich zudem mit wenigen Handgriffen auch als Nachrüstlösung an bestehenden Ventilen anordnen. Für den Ventilhersteller bietet dies zudem den Vorteil, dass nach Art eines Baukastensystems wahlweise Ventile 1 ohne eine Durchflussmengenregulierung oder durch Anordnung des Stellaufsatzes 6 mit einer Durchflussmengenregulierung angeboten werden können.

### Bezugszeichen:

- 1: Ventil
- 2: Ventilgehäuse
- 2.1: Gehäuseteil
- 2.2: Gehäuseteil
- 2.3: Verbindungsstelle
- 2.4: Rastelement
- 2.5: Rastelement
- 3: Hauptventil
- 4: Push-Push-Mechanik
- 4.1: Druckstück
- 4.2: Vorschubelement
- 4.3: Hülse
- 5: Vorsteuerventil
- 5.1: Vorsteuerelement
- 5.2: Dichtfläche
- 6: Stellaufsatz
- 7: Handbedienelement
- 7.1: Mantel
- 7.2: Boden
- 7.3: Verbindungsmittel
- 8: Stellelement
- 8.1: Stellfläche
- 8.2: Stellfläche
- 8.3: Verbindungsmittel
- 9: Stellelement
- 9.1: Stellfläche
- 9.2: Stellfläche
- 10: Anschlag
- 11: Anschlag
- 12: Hubscheibenpaar
- 13: Feder
- 14: Rastelement
- 15: Raststruktur
- 16: Zunge
- 17: Führungselement
- 17.1: Aufsteckschräge
- 18: Magnet
- 19: Basisventileinheit
- 20: Ventileinlauf
- 21: Ventilauslauf
- 22: Schließelement
- 22.1: Steueröffnung
- 23: Ventilsitz
- 24: Druckraum

- A: Ventilachse
- Sₘₐₓ: Öffnungsspalt
- S: Öffnungsspalt
- Sₘᵢₙ: Öffnungsspalt
- α: Winkel

## Patentansprüche

1. Ventil, insbesondere Servoventil, mit einem Ventilgehäuse (2), einem Hauptventil (3) und einem über eine Push-Push-Mechanik (4) betätigbaren Vorsteuerventil (5) zur Verstellung des Hauptventils (3) zwischen einer Offen- und einer Schließstellung, **gekennzeichnet durch**
einen lösbar an dem Ventilgehäuse (2) und der Push-Push-Mechanik (4) angeordneten Stellaufsatz (6), über welchen die Offenstellung zur Durchflussmengenregulierung einstellbar ist, wobei der Stellaufsatz (6) ein Handbedienelement (7) aufweist, welches mit dem Ventilgehäuse (2) rastverbunden ist,
wobei
über den Stellaufsatz (6) die Push-Push-Mechanik (4) bedienbar ist, und
wobei durch Druckbetätigung des Handbedienelements (7) die Push-Push-Mechanik (4) bedienbar und durch Drehbetätigung des Handbedienelements (7) die Offenstellung einstellbar ist.

2. Ventil nach Anspruch 1, wobei der Stellaufsatz (6) zwei zur Einstellung der Offenstellung gegeneinander verdrehbare, mit der Push-Push-Mechanik (4) wirkverbundene Stellelemente (8, 9) aufweist.

3. Ventil nach Anspruch 2, wobei die Stellelemente (8, 9) schräg verlaufende Stellflächen (8.1, 8.2, 9.1, 9.2) aufweisen.

4. Ventil nach Anspruch 2, wobei die Stellelemente (8, 9) jeweils zwei Stellflächen (8.1, 8.2, 9.1, 9.2) aufweisen.

5. Ventil nach Anspruch 3, wobei zwischen den jeweils zwei Stellflächen (8.1, 8.2, 9.1, 9.2) Anschläge (10, 11) zur Begrenzung der Drehbewegung angeordnet sind.

6. Ventil nach einem der Ansprüche 2 bis 4, wobei ein Stellelement (8) als eine mit der Push-Push-Mechanik (4) verbundene Stellscheibe ausgebildet ist.

7. Ventil nach einem der Ansprüche 2 bis 5, wobei ein Stellelement (9) an dem Handbedienelement (7) angeordnet ist.

8. Ventil nach Anspruch 6, wobei das Stellelement (9) einstückig mit dem Handbedienelement (7) verbunden ist.

9. Ventil nach Anspruch 1, wobei das Handbedienelement (7) derart mit dem Ventilgehäuse (2) verbunden ist, dass es entgegen der Kraft einer sich spannenden Feder (13) axial in Richtung der Push-Push-Mechanik (4) bewegbar und gegenüber diesem drehbeweglich ist.

10. Ventil nach Anspruch 1, wobei das Handbedienelement (7) Rastelemente (14) aufweist, die mit einer an dem Ventilgehäuse (2) angeordneten Raststruktur (15) verrastet sind.

11. Ventil nach Anspruch 10, wobei dass die Rastelemente (14) an federnden Rastzungen ausgebildet sind.

12. Ventil nach Anspruch 10, wobei dass die Raststruktur (15) nach Art eines umlaufenden Rastkragens ausgebildet ist.

## Claims

1. Valve, in particular servo valve, with a valve housing (2), a main valve (3) and a pilot valve (5) actuable via a push-push mechanism (4) for adjusting the main valve (3) between an open position and a closed position,
**characterized by**
a setting attachment (6) releasably arranged on the valve housing (2) and on the push-push mechanism (4), via which the open position can be set for flow rate regulation, wherein the setting attachment (6) comprises a manual operating element (7) which is latch-connected to the valve housing (2), wherein the push-push mechanism (4) is operable via the setting attachment (6), and wherein the push-push mechanism (4) is operable by pressing the manual operating element (7) and the open position is settable by rotating the manual operating element (7).

2. Valve according to claim 1, wherein the setting attachment (6) comprises two setting elements (8, 9) which are rotatable relative to one another for setting the open position and are operatively connected to the push-push mechanism (4).

3. Valve according to claim 2, wherein the setting elements (8, 9) comprise obliquely extending setting surfaces (8.1, 8.2, 9.1, 9.2).

4. Valve according to claim 2, wherein the setting elements (8, 9) each comprise two setting surfaces (8.1, 8.2, 9.1, 9.2).

5. Valve according to claim 3, wherein stops (10, 11) for limiting the rotational movement are arranged between the respective two setting surfaces (8.1, 8.2, 9.1, 9.2).

6. Valve according to one of claims 2 to 4, wherein one setting element (8) is designed as an adjusting disk connected to the push-push mechanism (4).

7. Valve according to one of claims 2 to 5, wherein one setting element (9) is arranged on the manual operating element (7).

8. Valve according to claim 6, wherein the setting element (9) is integrally connected to the manual operating element (7).

9. Valve according to claim 1, wherein the manual operating element (7) is connected to the valve housing (2) such that it is axially movable in the direction of the push-push mechanism (4) against the force of a tensioning spring (13) and is rotatable relative thereto.

10. Valve according to claim 1, wherein the manual operating element (7) comprises latching elements (14) which are latched to a latching structure (15) arranged on the valve housing (2).

11. Valve according to claim 10, wherein the latching elements (14) are formed on resilient latching tongues.

12. Valve according to claim 10, wherein the latching structure (15) is designed in the manner of a circumferential latching collar.

## Revendications

1. Vanne, en particulier servovanne, avec un corps de vanne (2), une vanne principale (3) et une vanne pilote (5) actionnable par l'intermédiaire d'un mécanisme push-push (4) pour déplacer la vanne principale (3) entre une position ouverte et une position fermée,
**caractérisée par**
un accessoire de réglage (6) disposé de manière amovible sur le corps de vanne (2) et sur le mécanisme push-push (4), par l'intermédiaire duquel la position ouverte peut être réglée pour la régulation du débit, l'accessoire de réglage (6) comprenant un élément de commande manuelle (7) relié par encliquetage au corps de vanne (2), le mécanisme push-push (4) étant actionnable par l'intermédiaire de l'accessoire de réglage (6), et le mécanisme push-push (4) étant actionnable par une pression sur l'élément de commande manuelle (7) et la position ouverte étant réglable par une rotation de l'élément de commande manuelle (7).

2. Vanne selon la revendication 1, dans laquelle l'accessoire de réglage (6) comprend deux éléments de réglage (8, 9) rotatifs l'un par rapport à l'autre pour le réglage de la position ouverte et reliés de manière fonctionnelle au mécanisme push-push (4).

3. Vanne selon la revendication 2, dans laquelle les éléments de réglage (8, 9) comprennent des surfaces de réglage (8.1, 8.2, 9.1, 9.2) s'étendant obliquement.

4. Vanne selon la revendication 2, dans laquelle les éléments de réglage (8, 9) comprennent chacun deux surfaces de réglage (8.1, 8.2, 9.1, 9.2).

5. Vanne selon la revendication 3, dans laquelle des butées (10, 11) destinées à limiter le mouvement de rotation sont disposées entre les deux surfaces de réglage respectives (8.1, 8.2, 9.1, 9.2).

6. Vanne selon l'une des revendications 2 à 4, dans laquelle un élément de réglage (8) est réalisé sous la forme d'un disque de réglage relié au mécanisme push-push (4).

7. Vanne selon l'une des revendications 2 à 5, dans laquelle un élément de réglage (9) est disposé sur l'élément de commande manuelle (7).

8. Vanne selon la revendication 6, dans laquelle l'élément de réglage (9) est relié d'un seul tenant à l'élément de commande manuelle (7).

9. Vanne selon la revendication 1, dans laquelle l'élément de commande manuelle (7) est relié au corps de vanne (2) de telle sorte qu'il est mobile axialement en direction du mécanisme push-push (4) à l'encontre de la force d'un ressort (13) se tendant, et mobile en rotation par rapport à celui-ci.

10. Vanne selon la revendication 1, dans laquelle l'élément de commande manuelle (7) comprend des éléments d'encliquetage (14) qui sont encliquetés dans une structure d'encliquetage (15) disposée sur le corps de vanne (2).

11. Vanne selon la revendication 10, dans laquelle les éléments d'encliquetage (14) sont formés sur des languettes d'encliquetage élastiques.

12. Vanne selon la revendication 10, dans laquelle la structure d'encliquetage (15) est réalisée sous la forme d'un collet d'encliquetage périphérique.
